# EUROPEAN PATENT SPECIFICATION

(11) **EP 2 421 701 B1**
(45) Date of publication and mention of the grant of the patent: **26.09.2018**
(21) Application number: 10720808.4
(22) Date of filing: 23.04.2010
(51) Int. Cl.: C08J 5/24, H01Q 17/00, B29L 31/00, B29L 31/08, B29C 70/24, B29C 70/86, B29C 70/88, B32B 5/02, B32B 5/06, B32B 5/18, B32B 5/22, B32B 5/26

(54) **INCORPORATION OF FUNCTIONAL CLOTH INTO PREPREG COMPOSITES**
EINBAU VON FUNKTIONSTUCH IN PREPREG-VERBUNDWERKSTOFFE
INCORPORATION DE TISSU FONCTIONNEL DANS LES COMPOSITES PRÉ-IMPRÉGNÉS

(30) Priority: 23.04.2009 GB 0907011
(43) Date of publication of application: 29.02.2012
(73) Proprietor: Vestas Wind Systems A/S, 8200 Aarhus N (DK)
(72) Inventor: APPLETON, Steve, Hampshire GU52 7LU (GB)
(74) Representative: Kent, Peter Joseph
(86) International application number: PCT/GB2010/050665
(87) International publication number: WO 2010/122350

(56) References cited:
- WO-A1-2008/025959
- WO-A1-2008/040936
- US-A- 5 470 413
- US-A- 5 932 496
- US-A1- 2005 067 532
- US-A1- 2006 292 375
- US-A1- 2007 093 163
- US-A1- 2007 141 927
- PINTO J ET AL: "Radar signature reduction of wind turbines through the application of stealth technology" ANTENNAS AND PROPAGATION, 2009. EUCAP 2009. 3RD EUROPEAN CONFERENCE ON, IEEE, PISCATAWAY, NJ, USA, vol. Stea, 23 March 2009 (2009-03-23), pages 3886-3890, XP031470611 ISBN: 978-1-4244-4753-4

## Description

### Field of the invention

The present invention relates to prepreg composite materials and to gel-coated composite structures such as wind turbine blades, which are fabricated from prepreg materials. More specifically, the present invention relates to the incorporation of functional cloth, such as radar absorbing material, into composite structures.

### Background

It is known to incorporate materials having specific functionality into composite structures such as wind turbine blades. An example of this is the inclusion of radar absorbing material (RAM) into composite blades. This is done to reduce the radar reflectivity of the blades so that they do not interfere with radar systems such as air traffic control systems or marine radar systems.

Typical radar absorbing materials include "circuit analogue" (CA) absorbers.. Plain weave glass-fibre cloth is a preferred substrate for such CA absorbers, because fibre movement, which could damage the CA absorbers, is lower for plain weave than for other weave types.

At present, it is known for plain weave cloth with deposited functionality to be introduced into gel-coated composite structures, such as wind turbine blades, fabricated using resin infusion or wet lay-up techniques. In these structures, the plain weave cloth is located significantly away from the outer surface defined by the gel coat, and hence the deposited functionality is also significantly away from the outer surface; here, the deposited functionality may be less effective and its consistent and predictable location in the structure may be difficult to ensure. In RAM applications especially, it is important for deposited functionality to be positioned at a consistent and predictable location in the structure in terms of depth from the outer surface. Also, the deposited functionality could include a de-icing circuit that clearly needs to be close to the outer surface of the structure to work effectively.

### Summary of the invention

According to a first aspect of the present invention, there is provided a combined prepreg material for use in composite lay-up techniques, the material comprising first and second layers impregnated with a matrix material such as a resin; the first layer being a functional layer and the second layer being a keying layer that comprises a keying medium to facilitate bonding of the combined prepreg material to a gel coat, wherein: the functional layer comprises a woven cloth, the keying medium is a tissue or fleece and a circuit is provided on a first surface of the woven cloth.

In contrast to the prior art, which is generally concerned with resin-infusion and wet lay-up techniques, the present invention is concerned with prepreg techniques. When the combined prepreg material is used in the fabrication of a gel-coated composite structure, the keying layer facilitates bonding of the functional layer to the gel coat. Only the keying layer is disposed between the functional layer and the gel-coat. This enables the functional layer to be disposed conveniently close to the outer surface of the composite structure. The keying layer advantageously prevents "print-through" of the weave pattern of the first layer onto the outer surface of the composite structure, thereby ensuring a good surface finish. In addition to these advantages, the combined prepreg material is easier to handle than separate functional and keying layers and so facilitates composite lay-up.

The circuit may be provided using conductive materials using known deposition techniques. The circuit may form a circuit analogue absorber for absorbing radar signals. However, in other examples, circuitry could be provided on the first surface of the cloth. For such applications, a silver-loaded ink would be suitable. In yet further embodiments, resistive circuit elements could be provided on the first surface. In the resulting composite structure, the resistive elements would be close to a gel-coated outer surface, and so would be suitably positioned for use as a de-icing network, for example when the composite structure is a wind turbine blade.

The woven cloth of the functional layer may be a glass-fibre cloth, or may be formed from other suitable reinforcing fibres, for example carbon fibres. The woven cloth preferably has a low-movement weave such that fibre movement is low and hence breaking of circuit elements is substantially avoided. A plain weave is an example of a low-movement weave. Preferably, the cloth is plain weave E-glass. The cloth is preferably thin, for example in the region of 184 gsm (grams per square metre).

When the combined prepreg material is used in the fabrication of gel-coated composite structures such as wind turbine blades, the keying layer is the only material between the functional layer and the outer surface of the composite structure defined by the gel coat. A keying layer of substantially uniform thickness may advantageously be employed in the combined prepreg material to ensure that the circuit is located at a consistent and predictable location in the composite structure in terms of depth from the outer surface. This ensures effective operation when the circuit is for RAM purposes, for example.

The keying medium may be a layer of non-woven glass-fibre tissue or fleece. Alternatively, the keying medium may be any other suitable material capable of keying into the gel-coat. Preferably, the keying layer is a thin layer, for example in the region of 50 gsm. A thin keying layer may advantageously be employed to ensure that the circuit is close to the outer surface of the composite structure. This is beneficial when the functionality is for de-icing purposes.

Gel-coated composite structures such as wind turbine blades generally have a layer of structural cloth close to their outer surface. When such composite structures are fabricated using a combined prepreg material according to the present invention, the functional layer is located between this structural layer and the keying layer/gel coat. In certain embodiments, the combined prepreg material may additionally include a third layer being a structural layer and comprising a cloth having a structural weave, for example a triaxial weave. Inclusion of a structural layer in the combined prepreg material facilitates composite lay-up because fewer layers are required to be separately assembled on a mould.

It is considered preferable to have the circuit at the interface between the functional and structural layers, rather than at the interface between the functional layer and the keying layer/gel coat. Accordingly, it is preferable that the keying layer of the combined prepreg material is adjacent to a second surface of the woven cloth, the second surface being opposite the first surface. This is because it is believed that the bond between the functional layer and the structural layer is stronger than the bond to the gel coat via the keying layer. Hence, having the circuit at the interface between the functional and structural layers is considered less likely to result in delamination in the resulting composite structure than if the functionality is at the interface between the functional layer and the keying layer/gel coat. However, in certain embodiments of the invention, it may be desirable to have the keying layer adjacent the first surface so that the circuit is at the interface between the functional layer and the keying layer, and hence is closer to the gel coat.
The layers of the combined prepreg material may be stitched or otherwise attached in order to hold the layers together without wrinkles, gaps or voids so that when the materials are impregnated with the matrix material, a consistent product is obtained. Coded stitching, for example colour coding or stitching patterns, may be used to identify a characteristic of the functional layer. This provides a visual indication of the functionality of the resulting combined prepreg material.
According to a second aspect of the present invention, there is provided a method of manufacturing a combined prepreg material for use in composite lay-up techniques, the method comprising assembling first and second layers and impregnating the first and second layers with a matrix material such as a resin; the first layer being a functional layer and the second layer being a keying layer that comprises a keying medium to facilitate bonding of the combined prepreg material to a gel coat, wherein: the functional layer comprises a woven cloth, the keying medium is a tissue or fleece and a circuit is provided on a first surface of the woven cloth. It will be apparent that the first and second aspects of the invention are product and method counterparts.
The method may comprise assembling a third layer with the first and second layers and impregnating the first, second and third layers with the matrix material; the third layer being a structural layer comprising a cloth having a structural weave.
The method may comprise attaching the layers together prior to impregnating the layers with the matrix material. For example, the layers may be stitched. Advantageously, the method may comprise attaching the three layers together at the same time as weaving the cloth of the structural layer.
According to a third aspect of the present invention within the overall inventive concept, there is provided a method of fabricating a composite structure having a gel coat defining an outer surface and a functional layer beneath the gel coat, the method including: applying the gel coat within a mould; laying a combined prepreg material on the gel coat, the combined prepreg material comprising first and second layers impregnated with a matrix material such as a resin; the first layer being a functional layer and the second layer being a keying layer that comprises a keying medium to facilitate bonding of the combined prepreg material to the gel coat, wherein: the functional layer comprises a woven cloth, the keying medium is a tissue or fleece and a circuit is provided on a first surface of the cloth; and the method further comprises curing the composite structure.
It will be appreciated that the combined prepreg material used in the above method may comprise some or all of the features of the combined prepreg materials described previously. For example, it may also comprise the structural layer. However, for conciseness, the optional features of the combined prepreg material are not repeated herein.
The inventive concept includes the use of a combined prepreg material as described above in the fabrication of gel-coated composite structures. Further, the inventive concept encompasses composite structures fabricated using a combined prepreg material as described above. The composite structure may have a gel coat defining an outer surface. The combined prepreg material may be bonded to the gel coat via the keying layer. The composite structure may be a blade for a wind turbine. The inventive concept extends to a wind turbine having a blade fabricated using a combined prepreg material as described above, and to a wind farm comprising at least one such wind turbine.

### Brief description of the drawings

Specific embodiments of the invention will now be described, by way of example only and without limitation to the scope of the invention, with reference to the following figures, in which:
Figure 1a is a schematic cross-section of a combined prepreg material comprising a functional cloth layer and a keying layer for keying to a gel coat;
Figure 1b is a schematic cross-section of a lay-up for the fabrication of a composite structure such as a wind turbine blade, in which the combined prepreg material of Figure 1a is laid on a gel coat in a mould, and one or more layers of prepreg structural cloth are laid on top of the combined prepreg material;
Figure 1c is a schematic cross-section showing the layers of Figure 1b assembled in the mould and a vacuum bag applied over the assembly for curing the resulting composite structure;
Figure 1d is a schematic cross-section showing the cured composite structure of Figure 1c released from the mould;
Figure 2a is a schematic cross-section of a combined prepreg material comprising a structural cloth layer, a functional cloth layer, and a keying layer for keying to a gel coat;
Figure 2b is a schematic cross-section of a lay-up for the fabrication of a composite structure such as a wind turbine blade, in which the combined prepreg material of Figure 2b is laid on a gel coat in a mould;
Figure 2c is a schematic cross-section showing the layers of Figure 2b assembled in the mould and a vacuum bag applied over the assembly for curing the resulting composite structure; and
Figure 2d is a schematic cross-section showing the cured composite structure of Figure 2c released from the mould.

### Detailed description

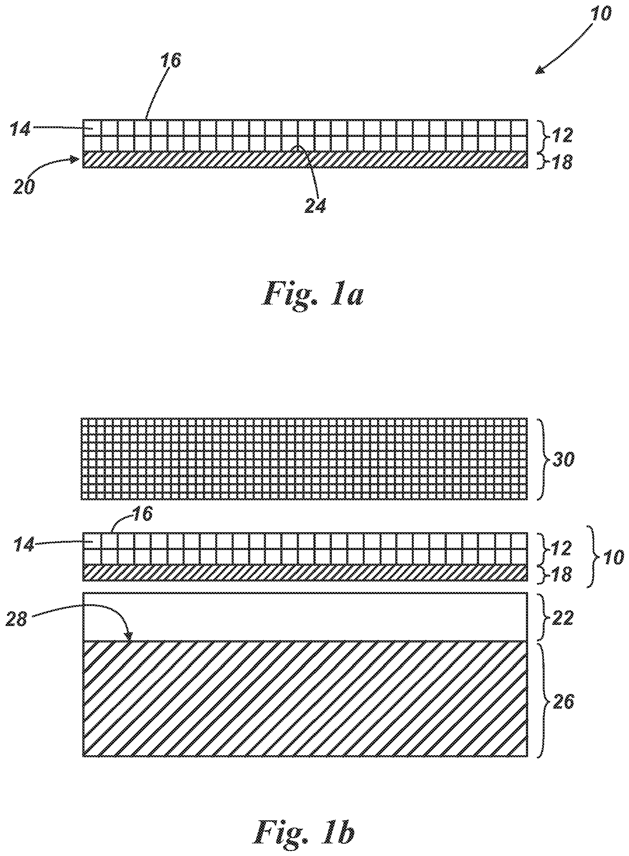

Referring to Figure 1a, there is shown a combined prepreg material 10 having a functional layer 12 comprising a glass-fibre cloth 14 that is provided on a first surface 16 with a circuit (not shown) to form part of a CA absorber for absorbing radar signals. The circuit may be provided on the first surface 16 using conventional manufacturing techniques, such as depositing. In this example, the glass-fibre cloth 14 has a low-movement weave, and is plain weave E-glass having a weight of 184 gsm (grams per square metre). A keying layer 18, comprising a keying medium 20 for facilitating bonding to a gel coat 22 (Figure 1b), is disposed on a second surface 24 of the plain weave cloth 12, opposite the first surface 16. In this example, the keying medium 20 is a thin layer of lightweight E-glass tissue, having a uniform fibre dispersion and a weight of 50 gsm. The functional layer 12 and the keying layer 18 are stitched together and then impregnated with a matrix material such as a curable epoxy resin to bind the layers 12, 18 together. The stitching does not impart significant mechanical strength to the combined prepreg material 10, but instead is used as a means to hold the layers 12, 18 together without wrinkles, gaps or voids so that when the materials are impregnated with resin, a consistent product is obtained. As there may be a requirement to produce combined prepreg materials having different functionality, coded stitching (for example using different coloured stitches) can be used to identify the particular functional layer 12 in the combined prepreg material.

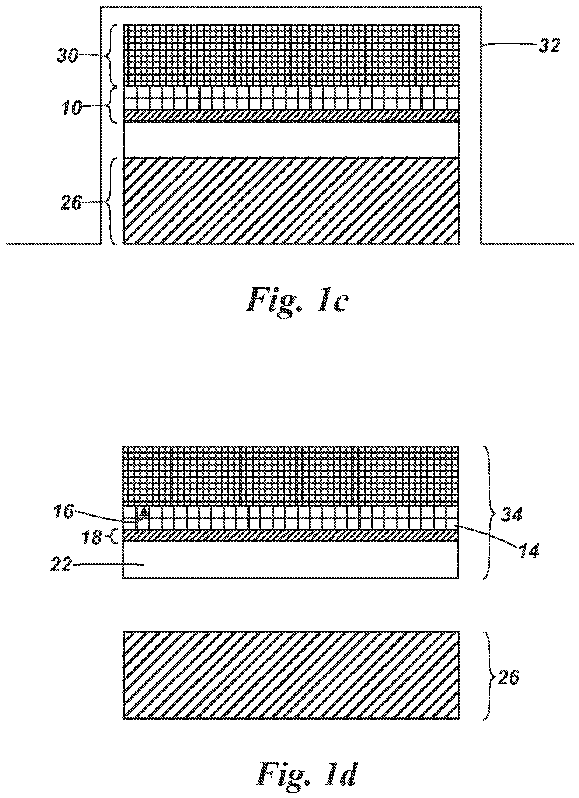

The combined prepreg material 10 is easier to lay-up than separate thin layers of tissue and E-glass, and may be advantageously utilised in the fabrication of composite structures such as wind turbine blades. The fabrication of a composite structure, such as a wind turbine blade, utilising the combined prepreg material 10 will now be described with reference to Figures 1b, 1c and 1d. Referring first to Figure 1b, a mould 26 is provided having a mould surface 28 corresponding in shape to the required outer contour of the structure. A suitable release agent (not shown) is applied to the mould surface 28, and a pigmented epoxy resin gel coat 22 is applied on top. The combined prepreg material 10 is then laid on top of the gel coat 22, with the tissue layer 18 in contact with the gel coat 22. The tissue 18 keys into the gel coat 22 and hence facilitates a strong bond with the gel coat 22.

A layer of structural cloth 30 is laid over the first surface 16 of the plain weave cloth 14. In this example, the structural cloth 30 is prepreg Triax™, which is available from suppliers such as Gurit™ or Hexcel™. Triax™ is an example of a glass-fibre cloth having a triaxial weave, and is woven from three separate yarn sets, such that the fibres are orientated at respective angles of 0 and +/- 45 degrees in the weave.

In this example, the circuit is at the interface between the functional cloth layer 12 and the structural cloth layer 30. At present, it is considered preferable to have the circuit on the side of the plain weave cloth 14 facing the structural cloth layer 30 rather than on the side of the plain weave cloth 14 that faces the gel coat 22. This is because the bond strength between the plain weave cloth 14 and the structural cloth layer 30 is understood to be stronger than the bond strength to the gel coat 22, and so it is considered undesirable to introduce materials at the interface with the gel coat 22 that could weaken this bond.

Whilst not shown in Figure 1b, the lay-up may include further materials on top of the structural layer 30, in accordance with the specific structural requirements of the composite structure. For example, when the structure is a wind turbine blade, a foam core layer (not shown) may be laid on top of the structural cloth layer 30. Additionally, a RAM back-reflector (not shown), for example a carbon tissue layer (not shown), may be provided in this region.

Referring now to Figure 1c, having assembled the prepreg materials 10, 30 on the gel-coated mould 26, the entire assembly is baked in a vacuum bag 32 to cure the resin.

Referring to Figure 1d, once curing is complete, the resulting gel-coated composite structure 34 is released from the mould 26. The circuit (not shown) provided on the first surface 16 of the glass-fibre cloth 14 is advantageously close to, and at a consistent depth from, the outer surface of the composite structure defined by the gel coat 22. A strong bond with the gel coat 22 is facilitated by the E-glass tissue 18. In addition, the E-glass tissue 18 provides a good covering of the texture of the underlying glass-fibre cloth 14 and results in the composite structure 34 having a smooth outer surface, i.e. the E-glass tissue substantially prevents "print-through" of the weave of the glass-fibre cloth 14 on the outer surface of the composite structure 34. The cured gel coat 22 provides a high quality and highly durable UV- and hydrolysis-resistant coating on the external surface of composite structure 34.

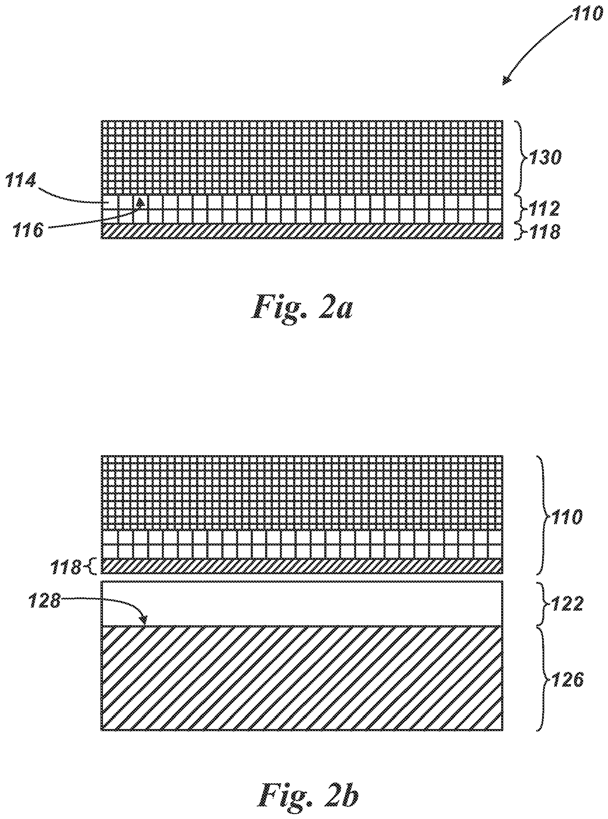

Figure 2a shows a tri-layer combined prepreg material 110 in which a functional layer 112 is disposed between a keying layer 118 and a structural layer 130. In common with the embodiment shown in Figure 1a, the functional layer 112 comprises a layer of 184 gsm plain weave E-glass 114, provided on a first surface 116 with a circuit (not shown), and the keying layer 118 comprises 50 gsm glass-fibre tissue. The structural layer 130 is a layer of Triax™. The functional layer 112, the keying layer 118 and the structural layer 130 are bound together by virtue of being impregnated with a curable epoxy resin to form the combined prepreg material 110.

The tri-layer combined prepreg material 110 is preferably manufactured simultaneously with the Triax™ layer 130. Triax™ is manufactured using an industrial weaving machine configured to weave glass fibres from three separate yarn sets. At the same time as the Triax™ is woven from the three yarn sets, the tissue layer 118 and the plain weave E-glass 114 are co-fed through the weaving machine. The weaving machine is configured to stitch together the Triax™ 130, the plain weave 114 and the tissue 118.

It will be appreciated that instead of co-feeding the tissue 118 and plain weave 114 through the weaving machine whilst the Triax™ 130 is manufactured, the Triax™ 130 could be prepared separately, and the three layers subsequently stitched together. Once the three layers have been stitched together, they are impregnated with the curable epoxy resin to form the combined prepreg material 110.

The tri-layer combined prepreg material 110 is a particularly convenient material for use in the fabrication of wind turbine blades, in order to include a functional layer close to the outer surface of the blade. Many existing blades have a structural cloth layer such as Triax™ as their outermost reinforced layer. By incorporating a structural cloth layer 130 such as Triax™ within the combined prepreg material 110, the fabrication of the composite blade is simplified, because fewer separate layers are required to be assembled in the mould. Thus, the tri-layer combined prepreg 110 facilitates handling of materials during the lay-up process.

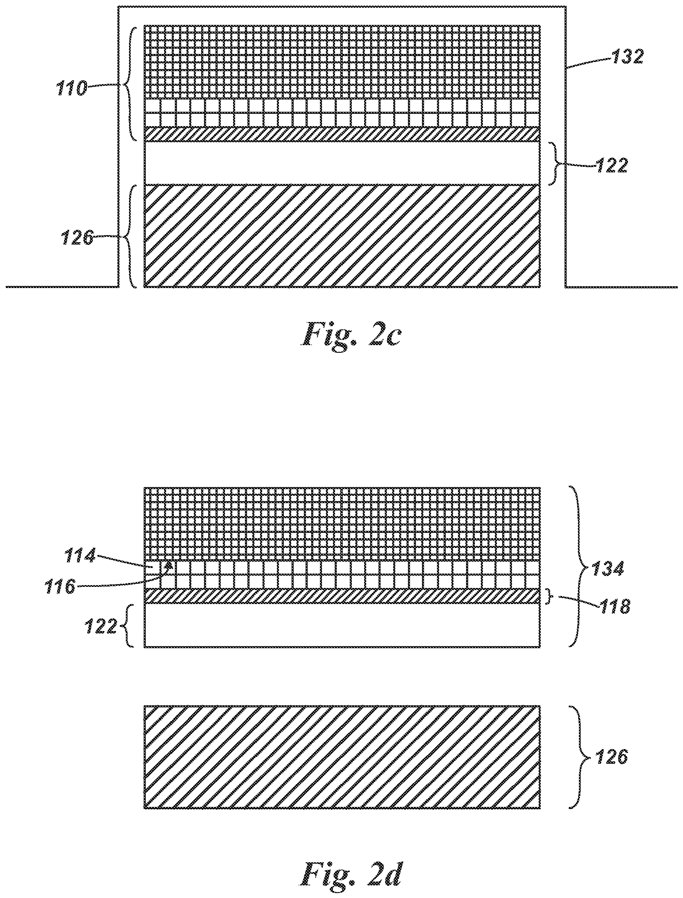

The fabrication of a composite structure, such as a wind turbine blade, utilising the tri-layer combined prepreg material 110 of Figure 2a will now be described with reference to Figures 2b, 2c and 2d. Referring first to Figure 2b, a mould 126 is provided having a mould surface 128 corresponding in shape to the required outer contour of the structure. A release agent (not shown) is applied to the mould surface 128 and a gel coat 122 is applied on top. The mould surface 128 and the tri-layer combined prepreg material 110 is laid on top of the gel coat 122, with the tissue layer 118 of the combined prepreg material 110 in contact with the gel coat 122.

Additional core layers (not shown) may be provided on top of the tri-layer combined prepreg 110 in accordance with the required structural properties of the composite structure. Referring now to Figure 2c, having laid the combined prepreg material 110, and any further prepreg materials (not shown) on the gel-coated mould 126, the entire assembly is baked in a vacuum bag 132 to cure the resin.

Referring to Figure 2d, once curing is complete, the resulting gel-coated composite structure 134 is released from the mould 126. The circuit (not shown) provided on the first surface 116 of the glass-fibre cloth 114 is advantageously close to, and at a consistent depth from, the outer surface of the composite structure 134 defined by the gel coat 122. A strong bond with the gel coat 122 is facilitated by the tissue layer 118.

Whilst the examples described above relate to the incorporation of radar absorbing materials into composite structures such as wind turbine blades, it will be appreciated that this is only one example of the type of functionality that can be incorporated using the above techniques. For example, the plain weave cloth 14, 114 could instead be provided with circuitry to provide a means for routing signals around a composite structure such as a wind turbine blade. For this purpose, an ink, such as a silver-loaded ink, could be provided on the plain weave cloth. Other applications could include deposited circuitry for use in de-icing blades. For de-icing purpose, it is particularly advantageous to be able to incorporate the functionality as close as possible to the outer surface of the blade.

Aside from wind turbine applications, it will be appreciated that the above techniques and combined prepreg materials can be used in any other gel-coated prepreg composite structures where it is required to introduce functionality close to the gel-coated outer surface.

Whilst glass-fibre reinforcing materials have been described herein, it will be appreciated that variants of the invention may utilise alternative reinforcing fibres, for example carbon fibres. It will also be appreciated that whilst stitching is specifically described as a means of holding the various layers together prior to impregnation with the matrix material, other suitable means of attachment could be employed for this purpose. Furthermore, it will be appreciated that attaching the layers together prior to impregnation with the matrix material is not essential.

Various other modifications may be made to the examples above without departing from the scope of the invention as defined by the following claims.

## Claims

1. A combined prepreg material (10, 110) for use in composite lay-up techniques, the material comprising first and second layers (12, 112, 18, 118) impregnated with a resin matrix material; the first layer (12, 112) being a functional layer comprising a woven cloth (14, 114) and the second layer (18, 118) being a keying layer that comprises a keying medium to facilitate bonding of the combined prepreg material (10, 110) to a gel coat (22, 122), wherein: the keying medium is a tissue or fleece and a circuit is provided on a first surface (16, 116) of the woven cloth (14, 114).

2. A combined prepreg material (10, 110) as claimed in Claim 1, wherein the second layer (18, 118) is adjacent to a second surface (24) of the cloth (14, 114), the second surface (24) being opposite the first surface (16, 116).

3. A combined prepreg material (10, 110) as claimed in Claim 1 or Claim 2, further comprising a third layer (30, 130) being a structural layer and comprising a cloth having a structural weave; wherein the first, second and third layers (12, 112, 18, 118, 30, 130) are impregnated with the resin matrix material.

4. A combined prepreg material (10, 110) as claimed in Claim 3, wherein the first layer (12, 112) is disposed between the keying layer (18, 118) and the structural layer (30, 130).

5. A combined prepreg material (10, 110) as claimed in any preceding claim, wherein the circuit is in the form of a circuit analogue absorber for absorbing radar signals.

6. A combined prepreg material (10, 110) as claimed in any preceding claim, wherein the layers (12, 112, 18, 118, 30, 130) are stitched together.

7. A combined prepreg material (10, 110) as claimed in Claim 6, wherein coded stitching is used to identify a characteristic of the circuit.

8. A method of manufacturing a combined prepreg material (10, 110) for use in composite lay-up techniques, the method comprising assembling first and second layers (12, 112, 18, 118) and impregnating the first and second layers with a resin matrix material; the first layer (12, 112) being a functional layer comprising a woven cloth (14, 114) and the second layer (18, 118) being a keying layer that comprises a keying medium to facilitate bonding of the combined prepreg material (10, 110) to a gel coat (22, 122), wherein the keying medium is a tissue or fleece and a circuit is provided on a first surface (16, 116) of the woven cloth (14, 114).

9. The method of Claim 8, further comprising assembling a third layer (30, 130) with the first and second layers (12, 112, 18, 118) and impregnating the first, second and third layers (12, 112, 18, 118, 30, 130) with the resin matrix material; the third layer (30, 130) being a structural layer comprising a cloth having a structural weave.

10. The method of Claim 8 or Claim 9, further comprising attaching the layers (12, 112, 18, 118, 30, 130) together prior to impregnating the layers with the resin matrix material.

11. The method of Claim 10, wherein the layers (12, 112, 18, 118, 30, 130) are stitched together prior to impregnating the layers with the resin matrix material.

12. The method of Claim 10 or Claim 11 when dependent upon Claim 9, further comprising attaching the three layers (12, 112, 18, 118, 30, 130) together at the same time as weaving the cloth of the structural layer (30, 130).

13. A composite structure fabricated using a combined prepreg material (10, 110) as claimed in any preceding claim.

14. A composite structure as claimed in Claim 13 and having a gel coat (22, 122) defining an outer surface, wherein the combined prepreg material (10, 110) is bonded to the gel coat (22, 122) via the second layer (18, 118).

15. A composite structure as claimed in Claim 13 or Claim 14, wherein the composite structure is a blade for a wind turbine.

16. A wind turbine having a blade according to Claim 15, or a wind farm comprising at least one such wind turbine.

17. A method of fabricating a composite structure having a gel coat (22, 122) defining an outer surface and a functional layer (12, 112) beneath the gel coat (22, 122), the method including:
applying the gel coat (22, 122) within a mould (26, 126);
laying a combined prepreg material (10, 110) on the gel coat (22, 122), the combined prepreg material (10, 110) comprising first and second layers (12, 112, 18, 118) impregnated with a resin matrix material; the first layer (12, 112) being a functional layer comprising a woven cloth (14, 114) and the second layer (18, 118) being a keying layer that comprises a keying medium to facilitate bonding of the combined prepreg material (10, 110) to the gel coat (22, 122), wherein: the keying medium is a tissue or fleece and a circuit is provided on a first surface (16) of the woven cloth (14, 114); and
curing the composite structure.

## Patentansprüche

1. Kombiniertes Prepregmaterial (10, 110) zur Verwendung in Verbundauflegetechniken, wobei das Material erste und zweite Schichten (12, 112, 18, 118) umfasst, die mit einem Harzmatrixmaterial imprägniert sind; wobei die erste Schicht (12, 112) eine funktionelle Schicht ist, die einen gewebten Stoff (14, 114) umfasst und die zweite Schicht (18, 118) eine kodierende Schicht ist, die ein kodierendes Medium umfasst, um das Verbinden des kombinierten Prepregmaterials (10, 110) mit einer Gelbeschichtung (22, 122) zu erleichtern, wobei: das kodierende Medium ein Gewebe oder Vlies ist und ein Schaltkreis auf einer ersten Oberfläche (16, 116) des gewebten Stoffs (14, 114) vorgesehen ist.

2. Kombiniertes Prepregmaterial (10, 110) nach Anspruch 1, wobei die zweite Schicht (18, 118) an eine zweite Oberfläche (24) des Stoffs (14, 114) angrenzt, wobei die zweite Oberfläche (24) der ersten Oberfläche (16, 116) gegenüberliegt.

3. Kombiniertes Prepregmaterial (10, 110) nach Anspruch 1 oder Anspruch 2, weiter umfassend eine dritte Schicht (30, 130), die eine strukturelle Schicht ist und einen Stoff mit einer strukturellen Webart umfasst; wobei die erste, zweite und dritte Schicht (12, 112, 18, 118, 30, 130) mit dem Harzmatrixmaterial imprägniert sind.

4. Kombiniertes Prepregmaterial (10, 110) nach Anspruch 3, wobei die erste Schicht (12, 112) zwischen der kodierenden Schicht (18, 118) und der strukturellen Schicht (30, 130) angeordnet ist.

5. Kombiniertes Prepregmaterial (10, 110) nach einem der vorstehenden Ansprüche, wobei der Schaltkreis die Gestalt eines Schaltkreisanalogabsorbers zum Absorbieren von Radarsignalen hat.

6. Kombiniertes Prepregmaterial (10, 110) nach einem der vorstehenden Ansprüche, wobei die Schichten (12, 112, 18, 118, 30, 130) zusammengenäht sind.

7. Kombiniertes Prepregmaterial (10, 110) nach Anspruch 6, wobei kodierte Nähte verwendet werden, um eine Eigenschaft des Schaltkreises zu identifizieren.

8. Verfahren zum Herstellen eines kombinierten Prepregmaterials (10, 110) zur Verwendung in Verbundauflegetechniken, wobei das Verfahren das Zusammenfügen erster und zweiter Schichten (12, 112, 18, 118) und das Imprägnieren der ersten und der zweiten Schicht mit einem Harzmatrixmaterial umfasst; wobei die erste Schicht (12, 112) eine funktionelle Schicht ist, die einen gewebten Stoff (14, 114) umfasst und die zweite Schicht (18, 118) eine kodierende Schicht ist, die ein kodierendes Medium umfasst, um das Verbinden des kombinierten Prepregmaterials (10, 110) mit einer Gelbeschichtung (22, 122) zu erleichtern, wobei das kodierende Medium ein Gewebe oder Vlies ist und wobei ein Schaltkreis auf einer ersten Oberfläche (16, 116) des gewebten Stoffs (14, 114) vorgesehen ist.

9. Verfahren nach Anspruch 8, weiter umfassend Zusammensetzen einer dritten Schicht (30, 130) mit der ersten und zweiten Schicht (12, 112, 18, 118) und Imprägnieren der ersten, zweiten und dritten Schicht (12, 112, 18, 118, 30, 130) mit dem Harzmatrixmaterial; wobei die dritte Schicht (30, 130) eine strukturelle Schicht ist, die ein Gewebe mit einer strukturellen Webart umfasst.

10. Verfahren nach Anspruch 8 oder Anspruch 9, weiter umfassend das Zusammenfügen der Schichten (12, 112, 18, 118, 30, 130) vor dem Imprägnieren der Schichten mit dem Harzmatrixmaterial.

11. Verfahren nach Anspruch 10, wobei die Schichten (12, 112, 18, 118, 30, 130) vor dem Imprägnieren der Schichten mit dem Harzmatrixmaterial zusammengenäht werden.

12. Verfahren nach Anspruch 10 oder Anspruch 11, sofern von Anspruch 9 abhängig, weiter umfassend das Zusammenfügen der drei Schichten (12, 112, 18, 118, 30, 130) gleichzeitig mit dem Weben des Stoffes der strukturellen Schicht (30, 130).

13. Verbundstruktur, hergestellt unter Verwendung eines kombinierten Prepregmaterials (10, 110) nach einem der vorstehenden Ansprüche.

14. Verbundstruktur nach Anspruch 13 und mit einer eine äußere Oberfläche definierenden Gelbeschichtung (22, 122), wobei das kombinierte Prepregmaterial (10, 110) über die zweite Schicht (18, 118) mit der Gelbeschichtung (22, 122) verbunden ist.

15. Verbundstruktur nach Anspruch 13 oder Anspruch 14, wobei die Verbundstruktur ein Flügelblatt für eine Windkraftanlage ist.

16. Windkraftanlage mit einem Flügelblatt nach Anspruch 15 oder ein Windpark, der mindestens eine solche Windkraftanlage umfasst.

17. Verfahren zum Herstellen einer Verbundstruktur mit einer Gelbeschichtung (22, 122), die eine äußere Oberfläche und eine funktionelle Schicht (12, 112) unter der Gelbeschichtung (22, 122) definiert, wobei das Verfahren einschließt:
Aufbringen der Gelbeschichtung (22, 122) innerhalb einer Form (26, 126);
Aufbringen eines kombinierten Prepregmaterials (10, 110) auf die Gelbeschichtung (22, 122), wobei das kombinierte Prepregmaterial (10, 110) erste und zweite Schichten (12, 112, 18, 118) umfasst, die mit einem Harzmatrixmaterial imprägniert sind; wobei die erste Schicht (12, 112) eine funktionelle Schicht mit einem gewebten Stoff (14, 114) und die zweite Schicht (18, 118) eine kodierende Schicht ist, die ein kodierendes Medium umfasst, um das Verbinden des kombinierten Prepregmaterials (10, 110) mit der Gelbeschichtung (22, 122) zu erleichtern, wobei: das kodierende Medium ein Gewebe oder Vlies ist und ein Schaltkreis auf einer ersten Oberfläche (16) des gewebten Stoffs (14, 114) vorgesehen ist; und
Aushärten der Verbundstruktur.

## Revendications

1. Matériau pré-imprégné combiné (10, 110) pour utilisation dans des techniques de pose de composite, le matériau comprenant une première et une deuxième couche (12, 112, 18, 118) imprégnées d'un matériau matriciel de résine; la première couche (12, 112) étant une couche fonctionnelle comprenant une toile tissée (14, 114) et la deuxième couche (18, 118) étant une couche de calage qui comprend un agent de calage pour faciliter la liaison du matériau pré-imprégné combiné (10, 110) avec une couche de gel (22, 122), dans lequel : l'agent de calage est un tissu ou une nappe et un circuit est aménagé sur une première surface (16, 116) de la toile tissée (14, 114).

2. Matériau pré-imprégné combiné (10, 110) selon la revendication 1, dans lequel la deuxième couche (18, 118) est adjacente à une seconde surface (24) de la toile (14, 114), la seconde surface (24) étant opposée à la première surface (16, 116).

3. Matériau pré-imprégné combiné (10, 110) selon la revendication 1 ou la revendication 2, comprenant en outre une troisième couche (30, 130) qui est une couche structurelle et qui comprend une toile ayant une armure structurelle ; dans lequel la première, la deuxième et la troisième couche (12, 112, 18, 118, 30, 130) sont imprégnées du matériau matriciel de résine.

4. Matériau pré-imprégné combiné (10, 110) selon la revendication 3, dans lequel la première couche (12, 112) est disposée entre la couche de calage (18, 118) et la couche structurelle (30, 130).

5. Matériau pré-imprégné combiné (10, 110) selon l'une quelconque des revendications précédentes, dans lequel le circuit se présente sous la forme d'un absorbeur analogique de circuit pour absorber des signaux radar.

6. Matériau pré-imprégné combiné (10, 110) selon l'une quelconque des revendications précédentes, dans lequel les couches (12, 112, 18, 118, 30, 130) sont cousues l'une à l'autre.

7. Matériau pré-imprégné combiné (10, 110) selon la revendication 6, dans lequel une couture codée est utilisée pour identifier une caractéristique du circuit.

8. Procédé de fabrication d'un matériau pré-imprégné combiné (10, 110) pour utilisation dans des techniques de pose de composite, le procédé comprenant l'assemblage d'une première et d'une deuxième couche (12, 112, 18, 118) et l'imprégnation de la première et de la deuxième couche avec un matériau matriciel de résine ; la première couche (12, 112) étant une couche fonctionnelle comprenant une toile tissée (14, 114) et la deuxième couche (18, 118) étant une couche de calage qui comprend un agent de calage pour faciliter la liaison du matériau pré-imprégné combiné (10, 110) à une couche de gel (22, 122), dans lequel l'agent de calage est un tissu ou une nappe et un circuit est aménagé sur une première surface (16, 116) de la toile tissée (14, 114).

9. Procédé selon la revendication 8, comprenant en outre l'assemblage d'une troisième couche (30, 130) avec la première et la deuxième couche (12, 112, 18, 118) et l'imprégnation de la première, de la deuxième et de la troisième couche (12, 112, 18, 118, 30, 130) avec le matériau matriciel de résine ; la troisième couche (30, 130) étant une couche structurelle comprenant une toile ayant une armure structurelle.

10. Procédé selon la revendication 8 ou la revendication 9, comprenant en outre la fixation des couches (12, 112, 18, 118, 30, 130) conjointement avant d'imprégner les couches avec le matériau matriciel de résine.

11. Procédé selon la revendication 10, dans lequel les couches (12, 112, 18, 118, 30, 130) sont cousues conjointement avant d'imprégner les couches avec le matériau matriciel de résine.

12. Procédé selon la revendication 10 ou la revendication 11 dans la mesure où elle dépend de la revendication 9, comprenant en outre la fixation des trois couches (12, 112, 18, 118, 30, 130) conjointement en même temps que le tissage de la toile de la couche structurelle (30, 130).

13. Structure composite fabriquée en utilisant un matériau pré-imprégné combiné (10, 110) selon l'une quelconque des revendications précédentes.

14. Structure composite selon la revendication 13 et ayant une couche de gel (22, 122) définissant une surface externe, dans laquelle le matériau pré-imprégné combiné (10, 110) est lié à la couche de gel (22, 122) via la deuxième couche (18, 118).

15. Structure composite selon la revendication 13 ou la revendication 14, dans laquelle la structure composite est une pale pour une éolienne.

16. Eolienne ayant une pale selon la revendication 15 ou parc éolien comprenant au moins une telle éolienne.

17. Procédé de fabrication d'une structure composite ayant une couche de gel (22, 122) définissant une surface externe et une couche fonctionnelle (12, 112) en dessous de la couche de gel (22, 122), le procédé incluant :
l'application de la couche de gel (22, 122) à l'intérieur d'un moule (26, 126) ;
la pose d'un matériau pré-imprégné combiné (10, 110) sur la couche de gel (22, 122), le matériau pré-imprégné combiné (10, 110) comprenant une première et une deuxième couche (12, 112, 18, 118) imprégnées d'un matériau matriciel de résine; la première couche (12, 112) étant une couche fonctionnelle comprenant une toile tissée (14, 114) et la deuxième couche (18, 118) étant une couche de calage qui comprend un agent de calage pour faciliter la liaison du matériau pré-imprégné combiné (10, 110) à la couche de gel (22, 122), dans lequel l'agent de calage est un tissu ou une nappe et un circuit est élaboré sur une première surface (16) de la toile tissée (14, 114) ; et
le durcissement de la structure composite.
